# EUROPEAN PATENT APPLICATION

(11) **EP 1 968 287 A1**
(43) Date of publication of application: **10.09.2008**
(21) Application number: 07004552.1
(22) Date of filing: 06.03.2007
(51) Int. Cl.: H04M 1/725

(54) **Capacitively enabling mobile telephone's UI for operational use**

(71) Applicant: Koninklijke KPN N.V., 2516 CK The Hague (NL)
(72) Inventor: Herrera van der Nood, José Manuel, 3225 EC Hellevoetsluis (NL)
(74) Representative: Wuyts, Koenraad Maria

(57) **Abstract**

A mobile telephone comprises a user interface with a key for controlling a functionality of the device, and a capacitive sensor for enabling the control of the functionality via the key dependent on a change of a capacitance sensed due to a change in proximity of a user.

## Description

### FIELD OF THE INVENTION

The invention relates to a mobile electronic device, such as a mobile telephone, comprising a user interface with a key for controlling a functionality of the device..

### BACKGROUND ART

A mobile, personal, electronic device such as a mobile telephone, which comprises a user interface with a key pad, may get activated inadvertently while it is being carried around. For example, a key may get depressed inadvertently as the device rubs against a seam in the lining of a pocket in the user's coat. Unintended calls may be the result.

A first type of mobile telephones is known, wherein a keyboard can be disabled and/or enabled under password control. Although this feature is primarily meant as a security measure to prevent unauthorized access to the telephone's operations, a mobile telephone with a keyboard disabled under password control will not give rise to inadvertent calls being made as a result of unintended key-presses.

Another type of mobile telephones is known from US patent 6,374,088. This publication discloses an arrangement in connection with an, at least partly, transparent pivotable protective hatch or flip for a mobile telephone apparatus. The flip is arranged to physically cover at least part of a keypad on the apparatus to prevent inadvertent keypad commands.

### SUMMARY OF THE INVENTION

The known device of the first type requires the user to first enable the telephone by entering a password, which is an operation that introduces a delay from the user's point of view. The known device of the second type requires additional mechanical components that increase the device's weight, bulkiness and costs of assembly. In addition, the user first needs to open the hatch before user interaction is possible in operational use, which again introduces a delay from the user's perspective.

It is an object of the invention to provide an alternative to the known devices in order to solve similar and other problems while avoiding the delays.

To this end, the inventor proposes a mobile electronic device, e.g., a mobile telephone or a personal digital assistant (PDA), that has a user interface with a key for controlling a functionality of the device, and with a tactile sensor for enabling the control of the functionality through the key dependent on a change of a sensed touch-related physical quantity due to a change in proximity of a user to the device. Accordingly, a keyboard blocking function in a mobile electronic device of the invention is automatically switched on or off under control of a touch-sensing electronic circuit in the mobile device. Preferably, the touch-related physical quantity is a capacitance and the tactile sensor is a capacitive sensor.

For completeness, reference is made to US patent application publication 20060104435 that discloses a telephone with a telephone hook switch. The switch includes: a capacitive sensor having a capacitance that varies when an object or a part of a human body having a charge contacts or approaches it; and a signal generation circuit for detecting the variation of the capacitance of the capacitive sensor when the object or the part of the human body contacts or approaches so as to generate an ON/OFF signal. As a result, mechanical and structural limitations on the telephone are overcome, and the economic use of an inner space of the telephone can be improved. In addition, various applications can be made to conform to an external shape of the telephone in terms of design. The known telephone is a desktop telephone, not a mobile telephone, and the capacitive sensor is used as an alternative to the mechanical plunger to indicate that the user wants to make a call by lifting the hook from the telephone's main body. In addition, Document US 20060104435 does not address inadvertent operation of the desktop telephone. Also note that certain known desktop telephone sets have speakerphone functionality that can be switched on or off via a button for communication without the hook being lifted off the apparatus. An inadvertent switching on of the speakerphone functionality is not prevented by a capacitive sensor in the hook.

For completeness, reference is made to US patent 6,442,013. This publication discloses an electronic device, e.g. a mobile telephone, having a front cover and a capacitive proximity sensor, comprising: a first electrode and a second electrode, said first electrode having a large face; and detector means connected to the first electrode and the second electrode for detecting the capacitance of the first electrode relatively to the second electrode and for providing a control signal responsive to the capacitance. The large face of the first electrode is inclined relative to the front cover. When an object moves farther away from, or closer to, the device, e.g. when the user grips around the communication device, the relative capacitance between the two electrodes will change significantly due to the spatial arrangement of the electrodes relatively to each other. The proximity sensor and detector can be used to control various functions, e.g., for answering an incoming call, controlling the volume of a loudspeaker, etc. US patent 6,442,013 neither teaches nor suggests a user interface with a key for control of a functionality of the device in operational use, and a proximity sensor for enabling the control of the functionality through the key dependent on proximity of a user.

### BRIEF DESCRIPTION OF THE DRAWING

The invention is explained in further detail, by way of example and with reference to the accompanying drawing, wherein:

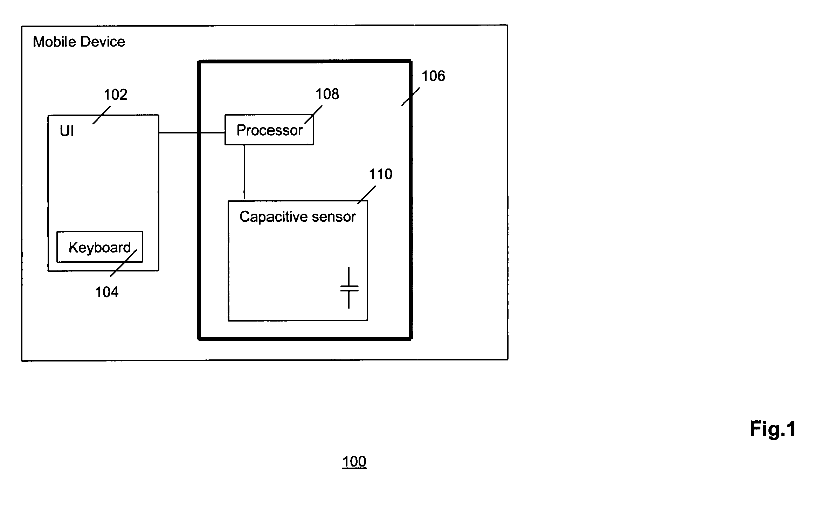

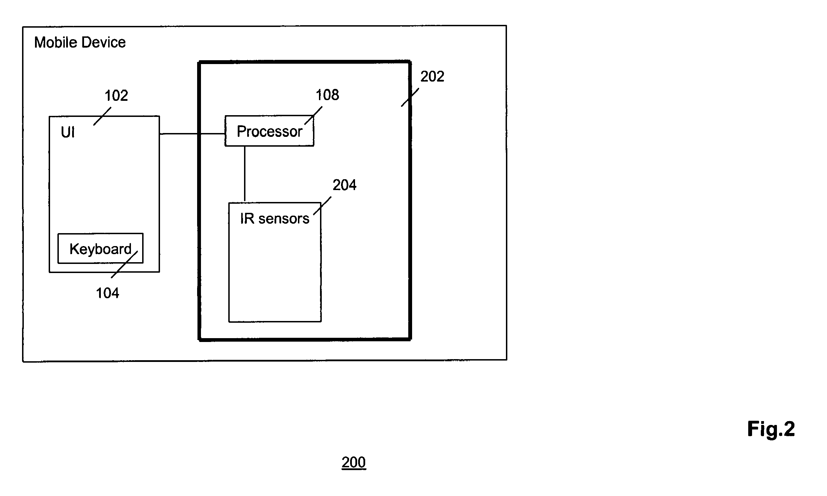

Fig.1 and 2 are block diagrams of a mobile device in the invention.

Throughout the Figures, similar or corresponding features are indicated by same reference numerals.

### DETAILED EMBODIMENTS

Fig.1 is a block diagram of a mobile electronic device 100 in the invention .Device 100 comprises a user interface (UI) 102 with a keyboard 104. Keyboard 104 can be a hard-keyboard (with separate physical elements representing individual keys or buttons) or a soft-keyboard (with a touch screen functionality, wherein different icons rendered thereon represent different key inputs). Device 100 has a blocking function for blocking interaction with device 100 via UI 102 and/or keyboard 104. The switching on and switching off of the automatic blocking function is controlled by an electronic circuit 106 in mobile device 100 that senses a change in capacitance owing to the proximity of the user. Circuit 106 comprises a data processor 108 and capacitive sensing circuitry 110. Capacitive sensing circuitry is well known in the art, e.g., from US patent 7,088,112; US patent 7,088,112; US patent 7,138,809. Data processor 108 then processes the measuring of the magnitude of one or more the capacitances, or the (order of) magnitude of the change(s) thereof, or the change(s) per unit of time, or the comparison of the measured magnitude(s) to one or more threshold values. This then enables processor 108 to discriminate between a touch by the user and another physical contact, e.g., with a piece of lining or a ballpoint. If needed, multiple capacitors can be used in circuitry 110, each at another strategic position at the body or housing of device 100. The positions are then typically chosen so as to coincide with the positions of the user's touching or holding device 100 in operational use. If a capacitance change is sensed at only a single position or if multiple capacitance changes are detected at different positions but at different moments, data processor 108 concludes that device 100 is not being manipulated by the user for user interaction via UI 102. If multiple changes occur substantially simultaneously, processor 108 concludes that the user intends to interact with device 100 via UI 102.

An advantage of device 100 over the known devices is its user-friendliness. The known devices require extra user intervention for locking or unlocking the keyboard or user-interface, e.g., by pressing a combination of keys or navigating through a layered menu in order to enter the proper combination of user inputs. Entering only part of the combination of keys will result in a device still not blocked. Another key-press may well trigger undesired operations, such as unintentionally placing a telephone call if the device comprises a mobile telephone. In the invention, device 100 is configured to only respond to key presses if device 100 is kept in the user's hand having a certain posture that creates a capacitive effect recognized by processor 108 as an intended use.

In an interesting embodiment of device 100, circuitry 106 discriminates between high and low values of sensed changes in the capacitance(s). This then will not let children activate keyboard 104 or user interface 102 of device 100 when they are playing with device 100 owing to a smaller capacitive effect. Preferably, device 100 is configurable, programmable or user-programmable with respect to what processor 108 identifies as a valid indication of the user intending to interact with device 100. For example, the sensed magnitude of the capacitance can be programmed above which the locking is cancelled. Possibly, device 100 provides for also having keyboard 104 or user interface 102 unlocked by a specific (preferably programmable) combination of key-presses if the capacitance trigger does not work or does not work properly yet. Programming by the user is accomplished by setting device 100 into a configuration mode via UI 102.

Preferably, the body of the device in the invention is at least partly electrically conductive, e.g., made of metal or having a conductive layer on the outside. That part of the body then functionally forms part of the capacitor whose capacitance is being affected by the proximity of the user.

Above embodiments address capacitive sensing of the user's proximity. Other embodiments may rely on different types of sensors to sense proximity.

For example, Fig.2 is a block diagram of an embodiment of a device 200 in the invention, wherein proximity of the user is detected as a temperature change at one or more specific locations at the body of device 200 relative to the rest of the body where the temperature stays fixed or does not increase as fast. Device 200 comprises an electronic circuit 202 for sensing temperature. Circuitry 202 comprises one or more temperature sensors 204, e.g., multiple infrared (IR) sensors, connected to data processor 108. Typically, if device 200 is not manipulated, its body will assume a more or less uniform temperature throughout. If the user touches device 200, the user's body heat will increase the temperature at those locations where device 200 is being touched. Processor 108 compares the temperatures sensed at one or multiple specific locations on the body of device 200, e.g., at opposite parts. This enables processor 108 to discriminate between, on the one hand, the user actually holding and touching device 200 and, on the other hand, device 200 being carried in a pocket near the user's body. Again, processor 108 may take into account the relative rate of temperature change per temperature sensor location in order to identify an intended operational use of device 200.

Other proximity sensors can be used, such as inductive sensors that sense a change in the inductance of one or more inductors (or: coils), light sensors at strategic places on the body of the device to determine, on the basis of light blocked or received, whether or not the device is being held in a way that is typical for operational use, etc.

## Claims

1. A mobile electronic device comprising:
a user interface with a key for controlling a functionality of the device;
a tactile sensor for enabling the control of the functionality via the key dependent on a change of a touch-related physical quantity due to a change in proximity of a user.

2. The device of claim 1, wherein the touch-related physical quantity comprises a capacitance and wherein the tactile sensor comprises a capacitive sensor.

3. The device of claim 1, wherein the touch-related physical quantity comprises a temperature, and wherein the tactile sensor comprises a temperature sensor.

4. The device of claim 1, comprising a mobile telephone.
